# EUROPÄISCHE PATENTSCHRIFT

(11) **EP 3 292 806 B1**
(45) Veröffentlichungstag und Bekanntmachung des Hinweises auf die Patenterteilung: **30.10.2019**
(21) Anmeldenummer: 17189150.0
(22) Anmeldetag: 04.09.2017
(51) Int. Cl.: A47J 43/07

(54) **RÜHRGEFÄSS FÜR EINE ELEKTROMOTORISCH BETRIEBENE KÜCHENMASCHINE**
MIXING VESSEL FOR AN ELECTRIC MOTOR-OPERATED KITCHEN APPLIANCE
RÉCIPIENT DE MÉLANGE POUR UN ROBOT MÉNAGER ÉLECTRIQUE

(30) Priorität: 07.09.2016 DE 102016116757
(43) Veröffentlichungstag der Anmeldung: 14.03.2018
(73) Patentinhaber: Vorwerk & Co. Interholding GmbH, 42275 Wuppertal (DE)
(72) Erfinder: Esslinder, Michael, 78628 Rottweil (DE); Zuber, Daniel, 42111 Wuppertal (DE); Scholder, Patrick, 42369 Wuppertal (DE)
(74) Vertreter: Müller, Enno

(56) Entgegenhaltungen:
- EP-A1- 2 875 762
- FR-A1- 2 908 619
- GB-A- 1 422 701

## Beschreibung

### Gebiet der Technik

Die Erfindung betrifft ein Rührgefäß für eine elektromotorisch betriebene Küchenmaschine, mit einem Gefäßboden, einem durch den Gefäßboden in das Rührgefäß ragenden Rührwerk und einem außenseitig mit dem Gefäßboden verbindbaren Fußteil, welcher zur Fixierung des Rührwerks an dem Gefäßboden ausgebildet ist.

Daneben betrifft die Erfindung eine elektromotorisch betriebene Küchenmaschine mit einem Basisgerät und einem mit dem Basisgerät verbindbaren Rührgefäß.

### Stand der Technik

Rührgefäße der in Rede stehenden Art sind bekannt, beispielsweise aus der DE 10 2010 016 667 A1 oder der EP 2 875 762 B1.

Die Rührgefäße finden insbesondere Einsatz in Verbindung mit einer elektromotorisch betriebenen Küchenmaschine, weiter insbesondere für den Haushaltsbereich. Zum Verrühren oder auch Zerkleinern von in das Rührgefäß eingebrachten Medien, insbesondere von eingebrachten Lebensmitteln, ist einem Gefäßboden des Rührgefäßes ein Rührwerk zugeordnet, beispielsweise in Form eines Messerwerkes. Eine Rührwerkwelle des Rührwerks durchsetzt den Gefäßboden, insbesondere zur Ausbildung eines frei nach unten über den Gefäßboden hinausragenden Kupplungsmitnehmers. Weiter ist diesbezüglich bekannt, das Rührgefäß in eine Rührgefäßaufnahme eines Basisgerätes der Küchenmaschine einzusetzen, in welcher das Rührgefäß mithilfe eines topfartigen Fußteils auf einer Aufstandfläche steht. Ein solcher Fußteil dient darüber hinaus in bekannter Weise zum Abstellen des Rührgefäßes auf einer Arbeitsfläche oder dergleichen nach Entnahme aus der Küchenmaschine.

Des Weiteren ist es bekannt, das Rührwerk beispielsweise zu Reinigungszwecken und/oder zum Zwecke eines Austausches lösbar an dem Rührgefäß anzuordnen. Dazu kann das Rührwerk beispielsweise mittels einer bajonettartigen Befestigung an dem Gefäßboden angeordnet sein, dies weiter bevorzugt unter Einbindung und Festlegung des Fußteils an dem Rührgefäß.

Das Rührwerk durchsetzt den Gefäßboden mit einem drehfest an dem Gefäßboden anordenbaren Lagerkörper, welcher einteilig oder auch mehrteilig ausgebildet sein kann. Der Lagerkörper ist wiederum durchsetzt von der Rührwerkwelle. Diesbezüglich ist weiter bekannt, zur Drehfestlegung an dem Gefäßboden wandungsaußenseitig des Lagerkörpers Vorsprünge vorzusehen, welche mit einer entsprechenden Kontur einer Öffnung des Gefäßbodens und/oder des Fußteils zusammenwirken.

Bei den im Stand der Technik bekannten Rührgefäßen ist es grundsätzlich möglich, dass ein Nutzer des Rührgefäßes vergisst, das Rührwerk an dem Gefäßboden zu befestigen, und dadurch die im Gefäßboden ausgebildete Öffnung zu verschließen. Sofern er dann das Rührgefäß mit Lebensmitteln, insbesondere Flüssigkeiten, befüllt, kann es zu einem Austreten aus dem Rührgefäß und in das Basisgerät der Küchenmaschine kommen, was dort Schäden verursachen könnte.

Daneben sind im Stand der Technik Rührgefäße mit Sicherheitsmaßnahmen bekannt. Die Veröffentlichung FR 2 908 619 A offenbart eine Maßnahme für ein gesichertes Aktivieren bzw. Deaktivieren eines Elektromotors der Küchenmaschine. Einem Fußteil des Rührgefäßes sind verlagerbare Klinken zugeordnet, welche zur Verlagerung korrespondierender Sicherheitsnocken dienen, die in einer aktiven Stellung eine Sicherheitssteuerung kontaktieren, so dass der Elektromotor der Küchenmaschine betrieben werden kann, und in einer inaktiven Stellung die Sicherheitssteuerung nicht kontaktieren, so dass der Elektromotor nicht betätigt werden kann. Die Verlagerung der Klinken hängt davon ab, ob der Fußteil mit dem Rührgefäß verbunden ist oder nicht. Des Weiteren offenbart die Veröffentlichung GB 1 422 701 A einen Mechanismus für ein Rührgefäß, der verhindert, dass ein Gefäßfußteil mit einer Gefäßaufnahme der Küchenmaschine verbunden werden kann. Ein Rührwerk kann mit dem Gefäßfußteil einerseits in einer Sperrstellung und andererseits in einer Freigabestellung verbunden werden, wodurch entweder die Verbindung des Gefäßfußteils mit der Gefäßaufnahme gesperrt oder ermöglicht wird. Dies verhindert eine Verbindung des Rührwerks mit einer Antriebswelle der Küchenmaschine, wenn das Rührwerk nicht in einer gesicherten Stellung in dem Gefäßfußteil angeordnet ist.

### Zusammenfassung der Erfindung

Im Hinblick auf den vorbeschriebenen Stand der Technik ist es daher Aufgabe der Erfindung, ein Rührgefäß der vorgenannten Art so weiterzubilden, dass ein versehentliches Einsetzen des Rührgefäßes ohne Rührwerk in die Küchenmaschine verhindert ist.

Zur Lösung der vorgenannten Aufgabe wird vorgeschlagen, dass der Gefäßboden oder der Fußteil ein mit einer Federkraft eines Federelementes beaufschlagtes Sperrelement aufweist, welches mittels eines korrespondierenden Anlageelementes des Fußteils oder des Gefäßbodens von einer eine Fixierung des Rührwerks verhindernden Sperrstellung entgegen der Federkraft in eine eine Fixierung ermöglichende Freigabestellung verlagerbar ist, wobei es bei Abwesenheit des Rührwerks an dem Gefäßboden nicht zu einer Fixierung des Fußteils an dem Gefäßboden kommt und der Fußteil relativ zu dem Gefäßboden verlagerbar bleibt und von dem Sperrelement in eine Sperrstellung gedrückt wird.

Durch diese erfindungsgemäße Ausgestaltung kommt es bei Abwesenheit eines Rührwerks an dem Gefäßboden auch nicht zu einer Fixierung des Fußteils an dem Gefäßboden. Somit bleibt der Fußteil relativ zu dem Gefäßboden verlagerbar und wird von dem Sperrelement bei Fixierungsversuchen des Nutzers stets in die Sperrstellung zurückgedrückt. In dieser Sperrstellung verhindert das Sperrelement ein Einsetzen des Rührgefäßes in die elektromotorisch betriebene Küchenmaschine, da das Rührgefäß nicht mehr in üblicher Art und Weise aufgenommen werden kann, sondern vielmehr beispielsweise keine Formkorrespondenz mehr zu der Rührgefäßaufnahme der Küchenmaschine aufweist oder eine Dimensionsänderung erleidet, welche beispielsweise ein Verriegeln des Rührgefäßes mit einem Deckel verhindert. Somit wird der Nutzer darauf aufmerksam gemacht, dass das Rührgefäß nicht ordnungsgemäß montiert ist, so dass entsprechend nachgebessert werden kann, bevor ein Schaden an der Küchenmaschine entsteht. Nur wenn das Rührwerk ordnungsgemäß an dem Gefäßboden befestigt ist, d. h. mittels des Fußteils an dem Gefäßboden fixiert, beispielsweise verklemmt, ist, ist auch der Fußteil drehfest mit dem Gefäßboden des Rührgefäßes verbunden, so dass beispielsweise das Anlageelement des Fußteils das Sperrelement des Gefäßbodens von der Sperrstellung in die Freigabestellung verlagert und somit eine Verbindung des Rührgefäßes mit der elektromotorisch betriebenen Küchenmaschine ermöglicht. Alternativ zu dem Gefäßboden kann auch der Fußteil ein mit einer Federkraft eines Federelementes beaufschlagtes Sperrelement aufweisen. In diesem Fall befindet sich das korrespondierende Anlageelement an dem Gefäßboden. Auch hierbei ist zur Verlagerung des Sperrelementes in die Freigabestellung wiederum eine ordnungsgemäße Fixierung des Rührwerks an dem Gefäßboden mittels des Fußteils notwendig.

Das entweder an dem Gefäßboden oder dem Fußteil angeordnete Sperrelement kann beispielsweise ein separates Federelement aufweisen, beispielsweise eine Schraubenfeder, Schenkelfeder, Biegefeder, Torsionsfeder und dergleichen, oder selbst aus einem elastischen Material ausgebildet sein, so dass das Sperrelement selbst ein eine Federkraft bereitstellendes Federelement ist. Dabei kann das Sperrelement beispielsweis aus Metall gebildet sein, bevorzugt aus korrosionsbeständigem austenitischem Edelstahl oder aus martensitisch gehärtetem Stahl mit Korrosionsschutzbeschichtung. Weiter kann das Sperrelement auch aus Kunststoff hergestellt sein, beispielsweise aus einem Glasfaser-Kunststoff oder dergleichen.

Das an dem Fußteil oder dem Gefäßboden angeordnete Anlageelement ist so angeordnet und ausgebildet, dass dieses in einen Verlagerungsweg des Sperrelementes hineinragt (bezogen auf eine an dem Rührgefäß angeordnete Stellung des Fußteils), welchen das Sperrelement von der Freigabestellung in die Sperrstellung, und umgekehrt, durchschreitet. Bei der Fixierung des Rührwerks und damit auch des Fußteils an dem Gefäßboden wird der Fußteil üblicherweise relativ zu dem Gefäßboden rotiert (um eine Rotationsachse des Rührwerks), wodurch das Anlageelement gegen das Sperrelement drückt. Das Anlageelement kann dabei ein an dem Gefäßboden bzw. dem Fußteil ausgebildeter Stift, Vorsprung, Wandungsteilbereich oder dergleichen sein.

Des Weiteren wird vorgeschlagen, dass das Sperrelement so an dem Gefäßboden oder dem Fußteil angeordnet ist, dass dieses bezogen auf einen entspannten Zustand des Federelementes in einen für eine Verbindung des Rührgefäßes mit einer elektromotorisch betriebenen Küchenmaschine ausgebildeten Verbindungsbereich ragt und somit eine Verbindung verhindert. Das Sperrelement befindet sich in der Sperrstellung somit in einem Bereich, in welchem bei korrekter Verbindung des Rührgefäßes mit dem Basisgerät der Küchenmaschine korrespondierende Elemente ineinandergreifen, sich kontaktieren oder dergleichen. Sofern das Sperrelement in die Freigabestellung verlagert ist, können diese Elemente in üblicher Art und Weise zueinander geführt werden, so dass das Rührgefäß in die Küchenmaschine eingesetzt werden kann. Wenn das Sperrelement hingegen in diesen Verbindungsbereich hineinragt, stellt dieses ein Hindernis dar, welches die Verbindung zwischen dem Rührgefäß und der Rührgefäßaufnahme der Küchenmaschine verhindert. Insbesondere kann das Rührgefäß dadurch schräg in der Rührgefäßaufnahme stehen, eine zu große Bauhöhe aufweisen, welche eine Verriegelung des Rührgefäßes mit einem Deckel verhindert oder dergleichen.

Insbesondere wird vorgeschlagen, dass der Verbindungsbereich elektrische Kontakte zur Verbindung mit entsprechenden Gegenkontakten einer elektromotorisch betriebenen Küchenmaschine aufweist. Sofern das Rührwerk nicht in den Gefäßboden eingesetzt ist, kann eine Fixierung zwischen dem Rührwerk und dem Gefäßboden und damit auch zwischen dem Fußteil und dem Gefäßboden nicht erreicht werden. Dies kann beispielsweise dazu führen, dass der Fußteil nicht in eine übliche Endstellung an dem Rührgefäß gebracht werden kann und der Verbindungsbereich des Gefäßbodens, welcher die elektrischen Kontakte aufweist, teilweise durch einen Teilbereich des Fußteils verdeckt bleibt, so dass die elektrischen Kontakte nicht in Verbindung mit Gegenkontakten der Küchenmaschine gebracht werden können. Gleichzeitig kann der angesprochene Teilbereich des Fußteils dadurch auf den Gegenkontakten aufliegen und somit eine gegenüber der ordnungsgemäß montierten Ausbildung des Rührgefäßes vergrößerte Höhe des Rührgefäßes oder auch eine Schrägstellung des Rührgefäßes in der Küchenmaschine bewirken. Diese Ausbildung eignet sich sowohl für Ausführungen, bei welchen das Sperrelement an dem Gefäßboden angeordnet ist, als auch für Ausführungen, bei welchen das Sperrelement an dem Fußteil angeordnet ist. In beiden Fällen kann eine Abdeckung zumindest eines der elektrischen Kontakte des Rührgefäßes innerhalb des Verbindungsbereiches erreicht werden.

Des Weiteren wird vorgeschlagen, dass das Sperrelement eine an dem Gefäßboden schwenkbeweglich angeordnete Sperrklinke ist, welche um eine senkrecht zu dem Gefäßboden angeordnete Schwenkachse schwenkbar ist. Gemäß dieser Ausführungsform ist das Sperrelement an dem Gefäßboden des Rührgefäßes angeordnet. Das Sperrelement ist innerhalb einer Ebene verschwenkbar, welche parallel zu der Ebene des Gefäßbodens ausgerichtet ist. Dadurch kann die Sperrklinke über zumindest einen Teilbereich des Gefäßbodens, insbesondere des zuvor genannten Verbindungsbereiches, welcher für eine Verbindung mit der Küchenmaschine genutzt wird, verschwenkt werden. Es ergibt sich somit in besonders einfacher Art und Weise eine Verlagerung des Sperrelementes von der Sperrstellung in die Freigabestellung, und umgekehrt.

Gemäß einer alternativen Ausführung wird vorgeschlagen, dass das Sperrelement ein an dem Fußteil schiebebeweglich angeordneter Sperrriegel ist, welcher bezogen auf einen verbundenen Zustand von Gefäßboden und Fußteil in einer zu dem Gefäßboden parallelen Ebene verschiebbar ist. Der Sperrriegel ist in der Freigabestellung so an einem Teilbereich des Fußteils angeordnet, dass der Sperrriegel nicht in einen Verbindungsbereich des Gefäßbodens ragt, welcher für eine ordnungsgemäße Verbindung des Rührgefäßes mit der elektromotorisch betriebenen Küchenmaschine benötigt wird. Durch die an dem Sperrriegel angreifende Federkraft wird der Sperrriegel bei fehlendem Kontakt des Sperrelementes zu einem Anlageelement des Gefäßbodens in der Sperrstellung gehalten, so dass bei fehlendem Rührwerk keine Fixierung zwischen dem Fußteil und dem Gefäßboden möglich ist und somit auch die Rückstellkraft des Federelementes nicht überwunden werden kann. Der Sperrriegel kann beispielsweise ein linienförmiger Sperrriegel sein, oder auch ein Sperrriegel, welcher nach der Art eines Kreisringsegmentes ausgebildet ist und um eine zentrale Öffnung des Fußteils rotierbar ist.

Insbesondere kann vorgesehen sein, dass der Fußteil durch Rotation um eine Rotationsachse des Rührwerks an dem Rührwerk und/oder dem Gefäßboden fixierbar ist. Bei dieser Ausgestaltung wird der Fußteil für eine Fixierung des Rührwerks an dem Gefäßboden (und damit auch für eine Fixierung des Fußteils an dem Gefäßboden) um die Rotationsachse rotiert. Dadurch kann auf besonders einfache Art und Weise ein an dem Fußteil angeordnetes Anlageelement gegen das Sperrelement bewegt werden bzw. ein an dem Fußteil angeordnetes Sperrelement gegen ein Anlageelement des Gefäßbodens bewegt werden. Wenn das Rührwerk nicht ordnungsgemäß in den Gefäßboden eingesetzt ist, kann das Fußteil nicht an dem Gefäßboden verspannt werden und das an dem Sperrelement angreifende Federelement bzw. das selbstfedernd ausgebildete Sperrelement drückt den Fußteil wieder in die Sperrstellung zurück, so dass ein Nutzer das Rührgefäß nicht korrekt in die Küchenmaschine einsetzen kann. Die Bewegung des Fußteils für die Fixierung des Rührwerkes an dem Gefäßboden erfolgt durch die Rotation um die Rotationsachse des Rührwerks in einer Ebene, welche der Schwenkebene der zuvor vorgeschlagenen Sperrklinke bzw. der Verschiebungsebene des zuvor vorgeschlagenen Sperrriegels entspricht. Es ergibt sich somit ein optimales Zusammenwirken im Sinne der Erfindung.

Darüber hinaus kann vorgesehen sein, dass der Fußteil und ein eine Rührwerkwelle lagernder Lagerkörper des Rührwerks korrespondierende Fixierungsmittel aufweisen, welche für eine Fixierung des Rührwerks aneinander festlegbar sind. Dabei ist vorgesehen, dass die Fixierungsmittel nur aneinander festlegbar sind, wenn der Gefäßboden zwischen dem Rührwerk und dem Fußteil angeordnet ist, was regelmäßig dann der Fall ist, wenn das Rührwerk ordnungsgemäß in das Rührgefäß eingesetzt ist. Die Rührwerkwelle greift dann durch eine Bodenöffnung des Gefäßbodens hindurch, bis die Fixierungsmittel des Lagerkörpers in eine parallel zu dem Gefäßboden ausrichtete Ebene ragen, in welcher die korrespondierenden Fixierungsmittel des Fußteils angeordnet sind. Sodann können die Fixierungsmittel des Fußteils und des Lagerkörpers des Rührwerks aneinander festgelegt werden, beispielsweise durch Verrasten, Verquetschen oder dergleichen. Für eine Fixierung des Rührwerks an dem Gefäßboden ist es erforderlich, dass der Lagerkörper bzw. das Fußteil zumindest jeweils ein Fixierungsmittel aufweisen. Vorteilhaft ist jedoch, wenn diese jeweils eine Mehrzahl von Fixierungsmitteln aufweisen, welche beispielsweise in Umfangsrichtung des Lagerkörpers des Rührwerks angeordnet sind, besonders bevorzugt äquidistant.

In diesem Zusammenhang wird insbesondere vorgeschlagen, dass der Lagerkörper des Rührwerks bezogen auf eine Rotationsachse des Rührwerks mindestens einen nach außen weisenden Lagervorsprung aufweist, und dass der Fußteil eine Fußteilöffnung zur Aufnahme des Lagerkörpers aufweist, wobei die Fußteilöffnung mindestens eine Fixierrampe zur Festlegung des Lagervorsprungs aufweist. Gemäß dieser Ausgestaltung weisen die korrespondierenden Fixierungsmittel zum einen einen an dem Lagerkörper angeordneten oder ausgebildeten Lagervorsprung und eine an dem Fußteil angeordnete oder ausgebildete Fixierrampe auf, welche insbesondere nach der Art einer Quetschverbindung aneinander festlegbar sind. Bezogen auf einen an dem Gefäßboden montierten Zustand des Rührwerks und des Fußteils liegen der Lagervorsprung und die Fixierrampe in Richtung der Rotationsachse betrachtet in unmittelbar nebeneinander angeordneten Ebenen, so dass der Lagervorsprung des Lagerkörpers bei einer Fixierbewegung des Fußteils an der Fixierrampe der Fußteilöffnung entlanggleitet, bis eine Endstellung erreicht ist, in welcher der Lagervorsprung maximal möglich mit der Fixierrampe verklemmt ist und das Rührwerk drehfest an dem Gefäßboden verklemmt ist.

Insbesondere wird vorgeschlagen, dass der Lagerkörper eine Mehrzahl von Lagervorsprüngen aufweist, welche in eine Richtung parallel zu der Rotationsachse betrachtet in drei zueinander beabstandeten Ebenen angeordnet sind, wobei die Lagervorsprünge mindestens einen in einer ersten Ebene angeordneten Festsetzungsvorsprung zum Eingriff in ein korrespondierendes Fixierungsmittel des Gefäßbodens, mindestens eine in einer zweiten Ebene angeordnete Lagerrampe und mindestens einen in einer dritten Ebene angeordneten Fixierungsvorsprung aufweisen, wobei die Fixierrampe des Fußteils zwischen der Lagerrampe und dem Fixierungsvorsprung fixierbar ist. Der in der ersten Ebene angeordnete Festsetzungsvorsprung dient dabei zum Eingriff in ein korrespondierendes Fixierungsmittel des Gefäßbodens. Beispielsweise liegt der Festsetzungsvorsprung bei korrekt an dem Gefäßboden angeordnetem Rührwerk genau in der Ebene des Gefäßbodens. Beispielsweise ist das Fixierungsmittel des Gefäßbodens dabei eine in Bezug auf die Form des Festsetzungsvorsprungs korrespondierende Aussparung, in welche der Festsetzungsvorsprung eingreifen kann und somit eine Rotation des Rührwerks relativ zu dem Gefäßboden verhindert. In der zweiten Ebene, welche ausgehend von der ersten Ebene in das Innere des Fußteils ragt, befindet sich die Lagerrampe, welche zur Wechselwirkung mit einer korrespondierenden Fixierrampe der Fußteilöffnung ausgebildet ist. Die Lagerrampe ist nach der Art eines Sägezahns ausgebildet, dessen Flanke in eine Richtung zeigt, welche einer Rotationsrichtung des Fußteils entspricht, die zum Lösen der Fixierung zwischen dem Fußteil und dem Rührwerk erforderlich ist. Bei korrekter Anordnung von Rührgefäß, Rührwerk und Fußteil gelangen die Flanke der Lagerrampe und die Fixierrampe in Umfangsrichtung nicht aneinander, so dass eine Rotation des Fußteils sowohl in Sperrrichtung als auch in Freigaberichtung möglich ist. Nur für den Fall, dass sich der Gefäßboden nicht zwischen dem Fußteil und dem Rührwerk befindet, stoppt die Flanke der Lagerrampe die Rotation des Fußteils. Der in der dritten Ebene angeordnete Fixierungsvorsprung ragt in der korrekten Montagestellung ebenfalls in das Innere des Fußteils hinein und weist einen Abstand zu der in der zweiten Ebene angeordneten Lagerrampe auf, welche geeignet ist, die Fixierrampe der Fußteilöffnung aufzunehmen, wobei es aufgrund der Steigung der Fixierrampe der Fußteilöffnung bei fortschreitender Rotation des Fußteils um die Rotationsachse zu einem Verklemmen von Rührwerk, Fußteil und Gefäßboden kommt.

Schließlich wird neben dem zuvor beschriebenen Rührgefäß ebenfalls eine elektromotorisch betriebene Küchenmaschine vorgeschlagen, welche ein Basisgerät und ein mit dem Basisgerät verbindbares Rührgefäß aufweist, das mit einem oder mehreren der zuvor in Bezug auf das Rührgefäß beschriebenen Merkmale ausgestattet ist. Die Merkmale und Vorzüge der elektromotorisch betriebenen Küchenmaschine ergeben sich dabei analog zu den in Bezug auf das Rührgefäß beschriebenen Merkmalen und Vorteilen.

### Kurze Beschreibung der Zeichnungen

Im Folgenden wird die Erfindung anhand von Ausführungsbeispielen näher erläutert. Es zeigen:
- Fig. 1: eine elektromotorisch betriebene Küchenmaschine mit einem darin eingesetzten Rührgefäß,
- Fig. 2: eine Explosionsdarstellung des Rührgefäßes mit einem Rührwerk, einem Gefäßboden und einem Fußteil,
- Fig. 3: eine vergrößerte Darstellung eines Teilbereiches des Gefäßbodens gemäß Figur 2,
- Fig. 4: den Fußteil in einer perspektivischen Ansicht von Innen gemäß einer ersten Ausführungsform,
- Fig. 5: das Rührwerk in einer Detailansicht,
- Fig. 6: das Rührwerk in einem an dem Gefäßboden montierten Zustand,
- Fig. 7: eine perspektivische Ansicht des Gefäßbodens mit einem schwenkbaren Sperrelement,
- Fig. 8: eine Unteransicht des Rührgefäßes mit Fußteil während einer Sperrstellung des Sperrelementes,
- Fig. 9: einen vergrößerten Ausschnitt eines Verbindungsbereiches des Rührgefäßes,
- Fig. 10: eine Unteransicht des Rührgefäßes mit dem Fußteil während einer Freigabestellung des Sperrelementes,
- Fig. 11: eine vergrößerte Ansicht des Verbindungsbereiches,
- Fig. 12: eine perspektivische Ansicht in einen Fußteil gemäß einer zweiten Ausführungsform mit einem Sperrelement in einer Sperrstellung,
- Fig. 13: das Fußteil gemäß Figur 12 mit dem Sperrelement in einer Freigabestellung,
- Fig. 14: eine Unteransicht eines Rührgefäßes mit dem Fußteil gemäß Figur 12 während einer Sperrstellung des Sperrelementes,
- Fig. 15: das Rührgefäß mit dem Fußteil gemäß Figur 13 während einer Freigabestellung des Sperrelementes.

### Beschreibung der Ausführungsformen

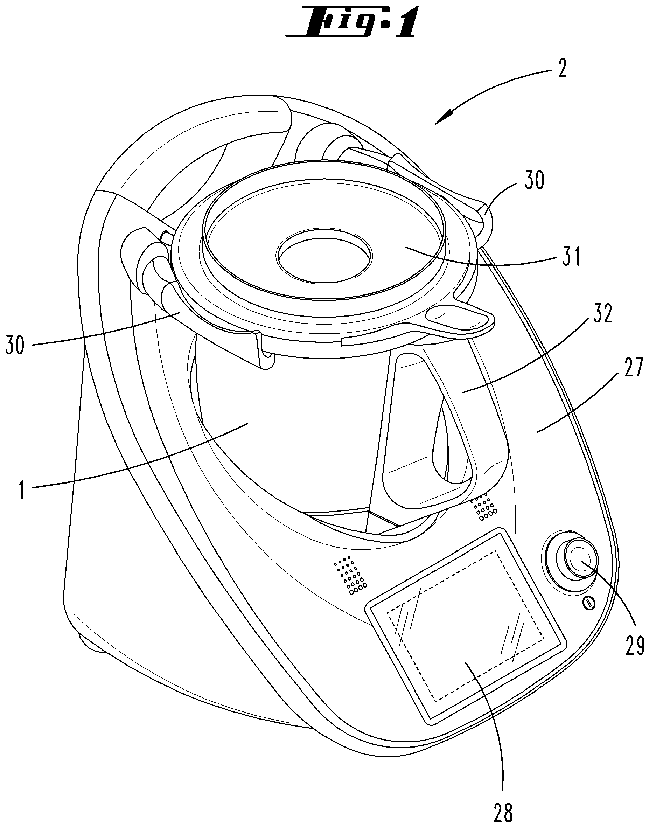

Figur 1 zeigt eine erfindungsgemäße Küchenmaschine 2 mit einem Rührgefäß 1. Die Küchenmaschine 2 weist ein Basisgerät 27 mit einer Rührgefäßaufnahme auf, in welche das Rührgefäß 1 eingesetzt ist. In dem Rührgefäß 1 ist einem Gefäßboden 3 ein Rührwerk 4 zugeordnet (in Figur 1 nicht dargestellt), welches über einen in dem Basisgerät 27 angeordneten, nicht dargestellten Elektroantrieb betreibbar ist. Das Rührgefäß 1 besitzt einen im Wesentlichen senkrecht ausgerichteten Griff 32, ist topfartig mit kreisrundem Querschnitt ausgebildet und trägt zentral an dem Gefäßboden 3 angeordnet das Rührwerk 4. Dem Gefäßboden 3 kann des Weiteren eine elektrische Widerstandsheizung zugeordnet sein.

Das Basisgerät 27 der Küchenmaschine 2 weist des Weiteren ein Display 28 auf, auf welchem ein Auswahlmenü, Zubereitungsanweisungen oder dergleichen angezeigt werden können. Daneben ist ein Schalter 29 angeordnet, welcher hier als Dreh-Tast-Schalter ausgebildet ist. Über diesen kann zum einen die Küchenmaschine 2 ein- und ausgeschaltet werden und zum anderen eine Auswahl getroffen werden, die beispielsweise auf dem Display 28 angezeigt wird. Das Basisgerät 27 verfügt zudem über zwei Verriegelungswalzen 30, welche zur Verriegelung des Rührgefäßes 1 mit einem Deckel 31 dienen.

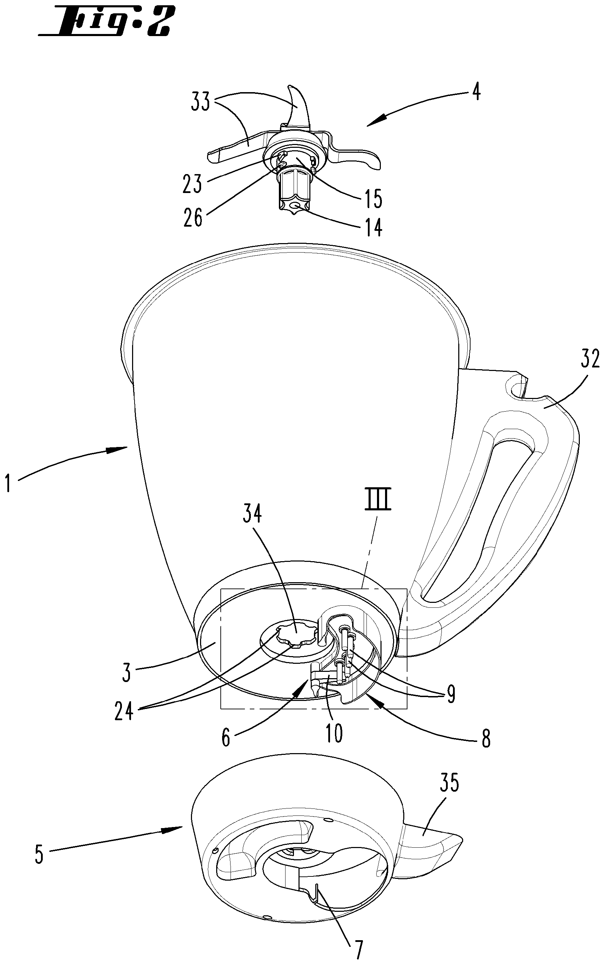

Figur 2 zeigt eine Explosionsdarstellung des Rührgefäßes 1 mit entnommenem Rührwerk 4 und einem von dem Gefäßboden 3 des Rührgefäßes 1 abgenommenen Fußteil 5. Das Rührwerk 4 ist hier als Messerlager mit einer Mehrzahl von Messern 33 ausgebildet, welche drehfest mit einer Rührwerkwelle 14 verbunden sind. Die Rührwerkwelle 14 ist drehbar in einem Lagerkörper 15 des Rührwerks 4 aufgenommen, welcher durch eine Bodenöffnung 34 des Gefäßbodens 3 des Rührgefäßes 1 hindurchgeführt werden kann, um diesen drehfest mit dem Gefäßboden 3 zu verbinden. An dem Lagerkörper 15 sind mehrere Festsetzungsvorsprünge 23 angeordnet, welche durch entsprechende Fixierungsmittel 24 der Bodenöffnung 34 des Gefäßbodens 3 geführt werden können. Jedes Fixierungsmittel 24 ist hier ein in Bezug auf seine Form mit einem Festsetzungsvorsprung 23 korrespondierender Aufnahmebereich. In der Darstellung werden vier solcher Festsetzungsvorsprünge 23 bzw. Fixierungsmittel 24 eingesetzt.

An der Außenseite des Gefäßbodens 3 sind des Weiteren in einem Verbindungsbereich 8, welcher der Verbindung mit einem korrespondierenden Verbindungsbereich des Basisgerätes 27 dient, mehrere elektrische Kontakte 9 in Form von Kontaktstiften angeordnet. Dem Verbindungsbereich 8 zugeordnet ist ein Sperrelement 6, welches hier als eine um eine vertikale Schwenkachse 11 schwenkbare Sperrklinke 10 ausgebildet ist. Im dargestellten demontierten Zustand des Fußteils 5 liegt die Sperrklinke 10 an dem nächstliegenden elektrischen Kontakt 9 an und ragt somit in den Verbindungsbereich 8 hinein.

Der Fußteil 5 ist wie auch das Rührgefäß 1 im Wesentlichen topfförmig ausgebildet und dient als Aufnahme für den Gefäßboden 3 des Rührgefäßes 1. Das Fußteil 5 stellt eine Standfläche für das Rührgefäß 1 bereit, um dieses beispielsweise auf einer Arbeitsplatte abzustellen, insbesondere wenn der Gefäßboden 3 mittels der Heizeinrichtung aufgeheizt ist. In einem an dem Gefäßboden 3 montierten Zustand des Fußteils 5 ragen die elektrischen Kontakte 9 in das Innere des Fußteils 5 hinein. Das Fußteil 5 wiederum kann formkorrespondierend mit der Rührgefäßaufnahme des Basisgerätes 27 der Küchenmaschine 2 verbunden werden. Dabei gelangen die elektrischen Kontakte 9 des Rührgefäßes 1 in Kontakt mit entsprechenden Gegenkontakten des Basisgerätes 27. Der Fußteil 5 weist ein Anlageelement 7 auf, welches im korrekt an dem Gefäßboden 3 montierten Zustand des Fußteils 5 gegen das als Sperrklinke 10 ausgebildete Sperrelement 6 wirkt.

Die Montage des Fußteils 5 an dem Gefäßboden 3 erfolgt so, dass das Fußteil 5 zunächst so an den Gefäßboden 3 angesetzt wird, dass eine Fußteilhandhabe 35 bezogen auf eine Rotationsachse 13 des Rührwerks 4 in eine radiale Richtung zeigt, welche von einer radialen Richtung des Griffes 32 des Rührgefäßes 1 abweicht. Sodann wird der Fußteil 5 um die Rotationsachse 13 rotiert, so dass die Fußteilhandhabe 35 auf den Griff 32 zugeschwenkt wird. Durch die Rotation des Fußteils 5 wird gleichzeitig auch das daran angeordnete Anlageelement 7 verlagert und gelangt in Kontakt mit dem Sperrelement 6, d. h. hier der Sperrklinke 10. Bei fortschreitender Rotation drückt das Anlageelement 7 das Sperrelement 6 entgegen der Rückstellkraft eines Federelementes 36 von dem elektrischen Kontakt 9 weg und aus dem Verbindungsbereich 8 heraus, so dass alle elektrischen Kontakte 9 frei zugänglich sind und bei Anordnen des Rührgefäßes 1 in dem Basisgerät 27 mit entsprechenden Gegenkontakten verbunden werden können. Sofern der Fußteil 5 nicht korrekt an dem Rührgefäß 1 montiert wurde, ragt das Sperrelement 6 in den Verbindungsbereich 8 hinein und hindert die formkorrespondierende Verbindung zwischen dem Rührgefäß 1 und dem Basisgerät 27.

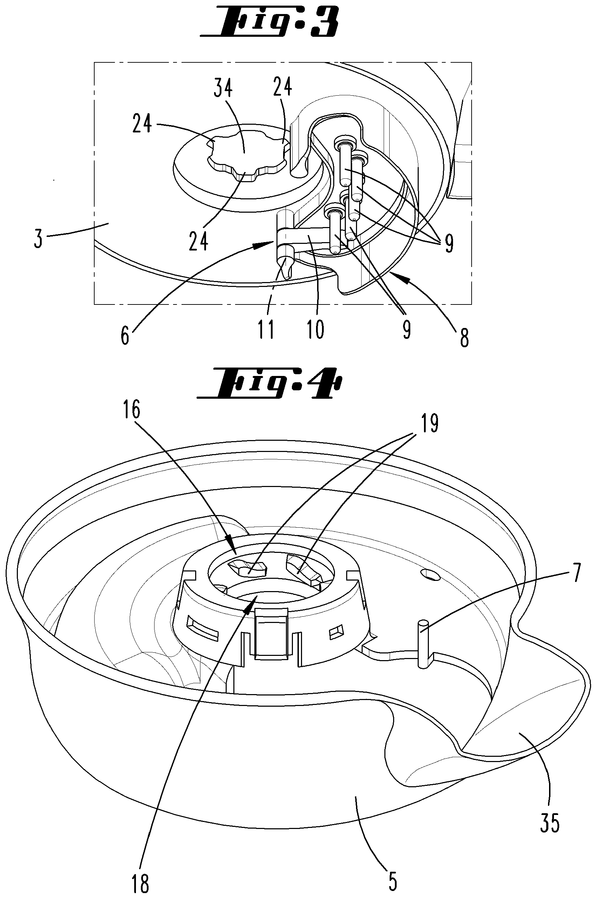

Figur 3 zeigt einen vergrößerten Ausschnitt des Gefäßbodens 3, in welchem die Bodenöffnung 34 mit den Fixierungsmitteln 24 und der Verbindungsbereich 8 mit den elektrischen Kontakten 9, dem Sperrelement 6 und dem dem Sperrelement 6 zugeordneten Federelement 36 angeordnet sind.

Figur 4 zeigt eine perspektivische Ansicht in den Fußteil 5 des Rührgefäßes 1. Der Fußteil 5 weist eine Fußteilöffnung 18 auf, welche zentral an dem Fußteil 5 ausgebildet ist und bei an dem Gefäßboden 3 montiertem Zustand (und aufrechter Stellung des Rührgefäßes 1) unter der Bodenöffnung 34 des Gefäßbodens 3 liegt, so dass sowohl die Fußteilöffnung 18 als auch die Bodenöffnung 34 beide symmetrisch zu der Rotationsachse 13 angeordnet sind und in Richtung der Rotationsachse 13 hintereinanderliegen. Die Fußteilöffnung 18 und die Bodenöffnung 34 sind im Wesentlichen gleich groß, so dass der Lagerkörper 15 des Rührwerks 4 durch beide hindurchgeführt werden kann. Die Fußteilöffnung 18 weist Fixierungsmittel 16 auf, welche zu entsprechenden Lagervorsprüngen 17 des Rührwerks 4 korrespondieren, um das Rührwerk 4 an dem Gefäßboden 3 und dem Fußteil 5 verklemmen zu können. Die Fixierungsmittel 16 sind hier als Fixierrampen 19 ausgebildet. Figur 4 zeigt des Weiteren das an dem Fußteil 5 angeordnete Anlageelement 7, welches so in das Innere des Fußteils 5 hineinragt, dass dieses bei Montage des Fußteils 5 an dem Gefäßboden 3 in den Verbindungsbereich 8 des Gefäßbodens 3 hineingreift und dort gegebenenfalls mit dem Sperrelement 6 wechselwirkt.

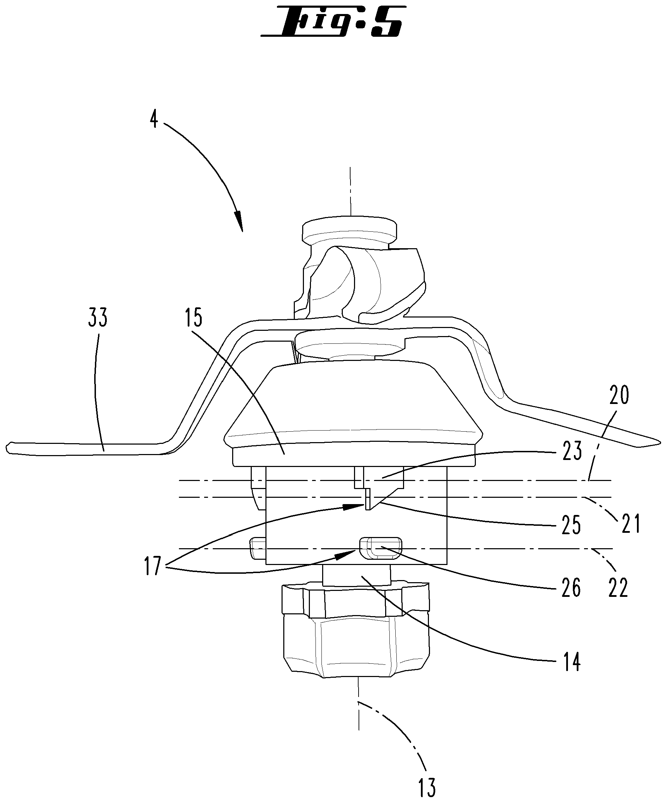

Figur 5 zeigt im Detail das Rührwerk 4 mit den Messern 33, welche drehfest mit der Rührwerkwelle 14 verbunden sind. Die Rührwerkwelle 14 rotiert um die Rotationsachse 13. An dem Lagerkörper 15, welcher drehfest mit dem Gefäßboden 3 verbunden werden kann, sind mehrere Festsetzungsvorsprünge 23 angeordnet, welche zum Eingriff in die Fixierungsmittel 24 der Bodenöffnung 34 des Gefäßbodens 3 des Rührgefäßes 1 dienen. In gleicher radialer Richtung - bezogen auf die Rotationsachse 13 - sind unterhalb jedes Festsetzungsvorsprungs 23 je zwei Lagervorsprünge 17 angeordnet, nämlich eine Lagerrampe 25 und ein Fixierungsvorsprung 26. Bezogen auf die Erstreckungsrichtung der Rotationsachse 13 ist der Festsetzungsvorsprung 23 in einer ersten Ebene 20 angeordnet. Die Lagerrampe 25 bzw. die Lagerrampen 25 (in Umfangsrichtung des Lagerkörpers 15) sind in einer dazu beabstandeten zweiten Ebene 21 angeordnet und die Fixierungsvorsprünge 26 in einer dritten Ebene 22. Der Festsetzungsvorsprung 23 und die Lagerrampe 25 gehen unmittelbar ineinander über, während die Lagerrampe 25 und der Fixierungsvorsprung 26 in Richtung der Rotationsachse 13 zueinander beabstandet sind, so dass später bei Anordnung des Rührwerks 4 und des Fußteils 5 an dem Gefäßboden 3 eine entsprechende Fixierrampe 19 des Fußteils 5 zwischen diesen aufgenommen werden kann.

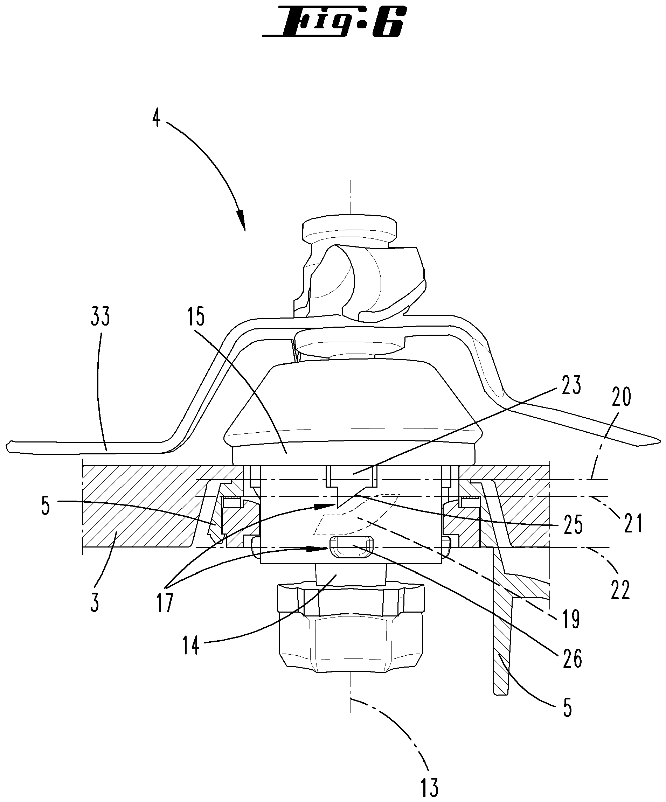

Figur 6 zeigt einen an dem Gefäßboden 3 angeordneten Zustand des Rührwerks 4. Hier ist die Fixierrampe 19 des Fußteils 5 zwischen die Lagerrampe 25 und den Fixierungsvorsprung 26 des Lagerkörpers 15 des Rührwerks 4 geführt. Gleichzeitig stehen auch die Fixierungsmittel 24 der Bodenöffnung 34 des Gefäßbodens 3 und die Festsetzungsvorsprünge 23 des Lagerkörpers 15 in Eingriff miteinander, so dass die Festsetzung des Lagerkörpers 15 an dem Fußteil 5 gleichzeitig unter Festsetzung des Gefäßbodens 3 erfolgt. Somit sind sowohl der Gefäßboden 3, als auch das Rührwerk 4 und der Fußteil 5 miteinander verbunden, nämlich hier über eine Quetschverbindung.

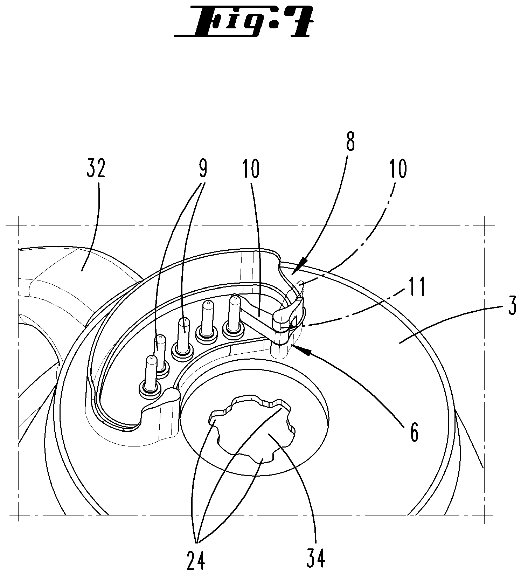

Figur 7 zeigt eine Unteransicht des Rührgefäßes 1 auf die Ebene des Gefäßbodens 3. Zu erkennen sind die Bodenöffnung 34 mit den Fixierungsmitteln 24, welche zur Aufnahme der Festsetzungsvorsprünge 23 des Lagerkörpers 15 des Rührwerks 4 ausgebildet sind, sowie der Verbindungsbereich 8 des Gefäßbodens 3, in welchem fünf elektrische Kontakte 9 ausgebildet sind. An einem der elektrischen Kontakte 9 liegt das als Sperrklinke 10 ausgebildete Sperrelement 6 an. Das Sperrelement 6 ist um die Schwenkachse 11 schwenkbar und mit der Kraft des Federelementes 36 beaufschlagt, welches hier als Schenkelfeder ausgebildet ist. Die Rückstellkraft des Federelementes 36 weist in Richtung des elektrischen Kontaktes 9, an welchem das Sperrelement 6 in der Sperrstellung anliegt. Demgegenüber ist eine Freigabestellung gestrichelt gezeichnet. Diese Freigabestellung kann das Sperrelement 6 bei Überwindung der Rückstellkraft des Federelementes 36 erreichen. Zum Überwinden der Rückstellkraft dient das an dem Fußteil 5 angeordnete Anlageelement 7, welches das Sperrelement 6 von der an dem elektrischen Kontakt 9 anliegenden Sperrstellung in die gestrichelt gezeichnete Freigabestellung drücken kann.

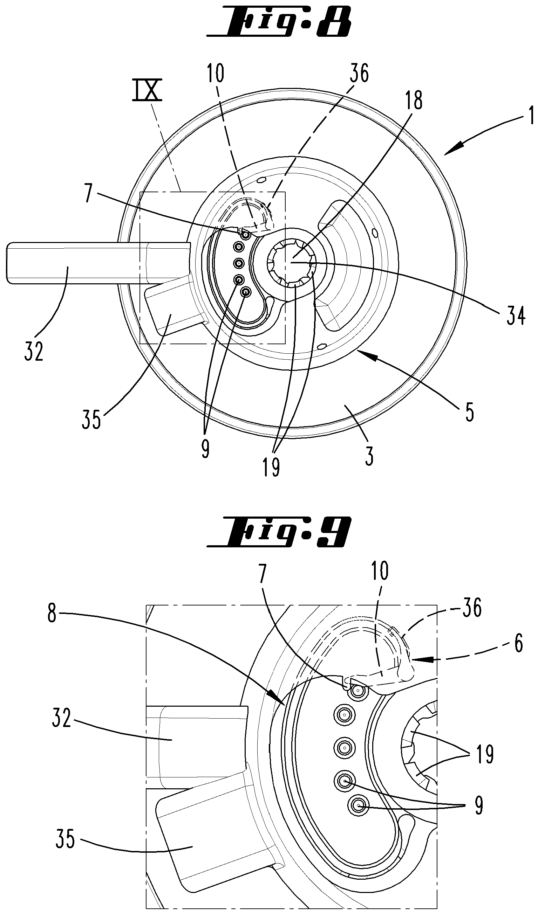

Figur 8 zeigt eine Unteransicht des Rührgefäßes 1 mit daran angeordnetem Fußteil 5. Figur 9 zeigt einen vergrößerten Ausschnitt daraus. Der Fußteil 5 befindet sich in einem noch nicht drehfest an dem Rührgefäß 1 angeordneten Zustand. Dabei sind die Fußteilhandhabe 35 und der Griff 32 des Rührgefäßes 1 noch nicht in derselben radialen Richtung relativ zu der Rotationsachse 13 des Rührwerks 4 ausgerichtet. Bezogen auf das Sperrelement 6 des Rührgefäßes 1 entspricht dies der Sperrstellung, in welcher das Sperrelement 6 in den Verbindungsbereich 8 des Rührgefäßes hineinragt, ein Teil des Verbindungsbereiches 8 durch den Fußteil 5 abgeschattet ist und die elektrischen Kontakte 9 des Rührgefäßes 1 infolge dessen nicht mit entsprechenden Gegenkontakten des Basisgerätes 27 der Küchenmaschine 2 verbunden werden können. Sofern ein Nutzer das Rührgefäß 1 in diesem Zustand mit dem Basisgerät 27 zu verbinden sucht, scheitert die formkorrespondierende Verbindung zwischen dem Rührgefäß 1 und dem Basisgerät 27 zum einen an dem Herausstehen der Fußteilhandhabe 35 über den Griff 32 hinaus und zum anderen an der Anlage des Sperrelementes 6 an dem elektrischen Kontakt 9, was ein formkorrespondierendes Einbringen der elektrischen Kontakte 9 in die entsprechenden Gegenkontakte des Basisgerätes 27 verhindert.

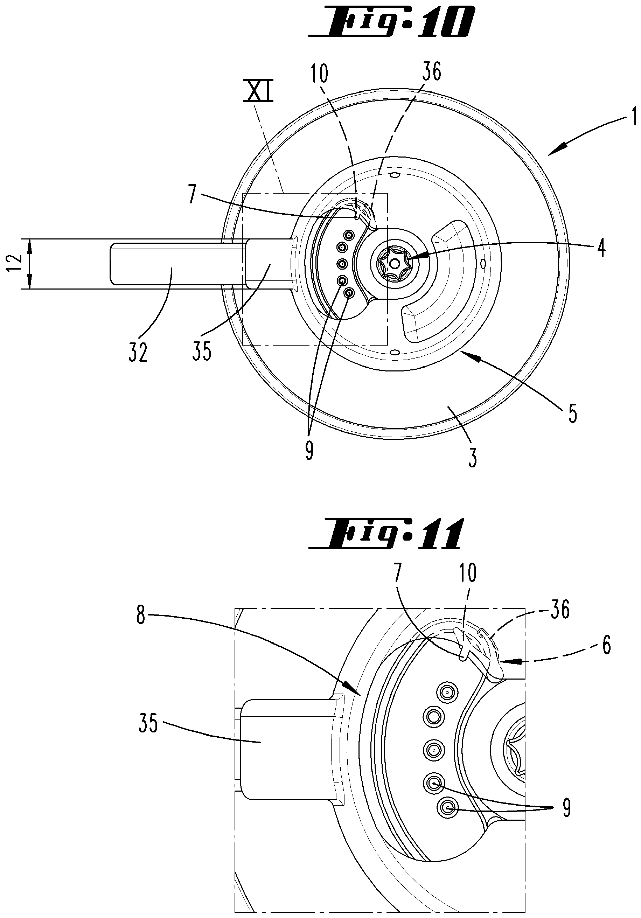

Figur 10 zeigt demgegenüber die Freigabestellung des Sperrelementes 6, in welcher das Sperrelement 6 mittels des Anlageelementes 7 aus dem Verbindungsbereich 8 herausgedrückt ist. In dieser Freigabestellung liegen der Griff 32 des Rührgefäßes 1 und die Fußteilhandhabe 35 des Fußteils 5 in derselben radialen Richtung bezogen auf die Rotationsachse 13 des Rührwerkes 4. Durch die bei der Rotation des Fußteils 5 aufgewendete Kraft kann die Rückstellkraft des Federelementes 36 überwunden werden, so dass das Anlageelement 7 das Sperrelement 6 vollständig aus dem Verbindungsbereich 8 entfernen kann. Die elektrischen Kontakte 9 liegen somit frei und können mit den Gegenkontakten des Basisgerätes 27 verbunden werden. Figur 11 zeigt einen vergrößerten Ausschnitt der Figur 10.

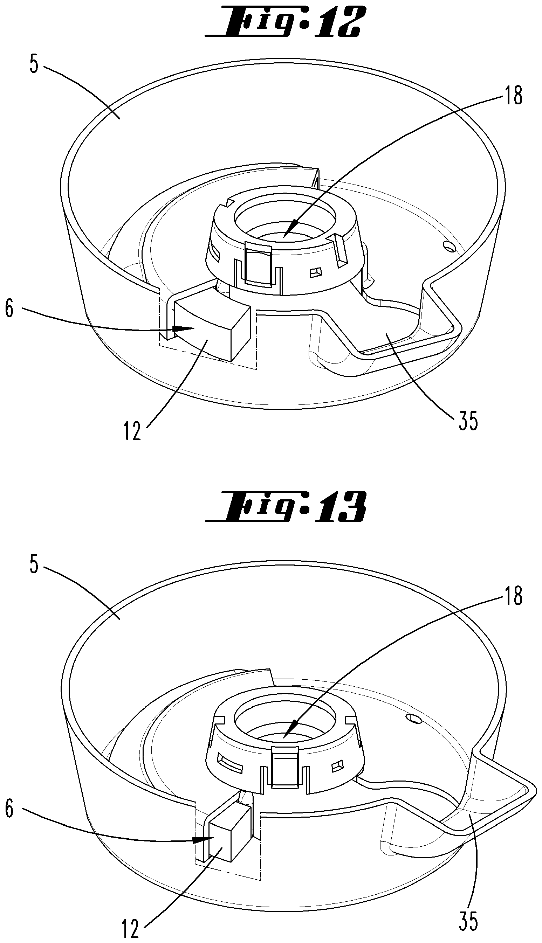

Figur 12 zeigt eine perspektivische Ansicht in ein Fußteil 5 gemäß einer zweiten Ausführungsform. Hier weist der Fußteil 5 ein Sperrelement 6 auf, welches als Sperrriegel 12 ausgebildet ist. Der Sperrriegel 12 ist halbkreisförmig ausgebildet und im gezeigten montierten Zustand von Fußteil 5 und Gefäßboden 3 in einer Ebene parallel zu dem Gefäßboden 3 verlagerbar, nämlich um die Rotationsachse 13 des Rührwerks 4. Der Sperrriegel 12 ist bezogen auf einen Endbereich mit einem Federelement 36 verbunden, welches hier beispielsweise als Schraubenfeder ausgebildet ist. In der in Figur 12 dargestellten Situation ist das Federelement 36 in Richtung der Rückstellkraft expandiert, so dass ein dem Federelement 36 gegenüberliegender Endbereich des Sperrriegels 12 maximal weit in eine Sperrstellung verlagert ist.

Figur 13 zeigt eine perspektivische Ansicht in den Fußteil 5 bei eingefahrenem Sperrriegel 12. Dabei ist der Sperrriegel 12 gegen die Rückstellkraft des Federelementes 36 eingefahren. Diese Stellung kann nur erreicht werden, wenn das Rührwerk 4 korrekt an einem Gefäßboden 3 und einem Fußteil 5 verspannt ist und der Sperrriegel 12 von einem Anlageelement 7 des Gefäßbodens 3 in die Freigabestellung zurückgedrückt wird.

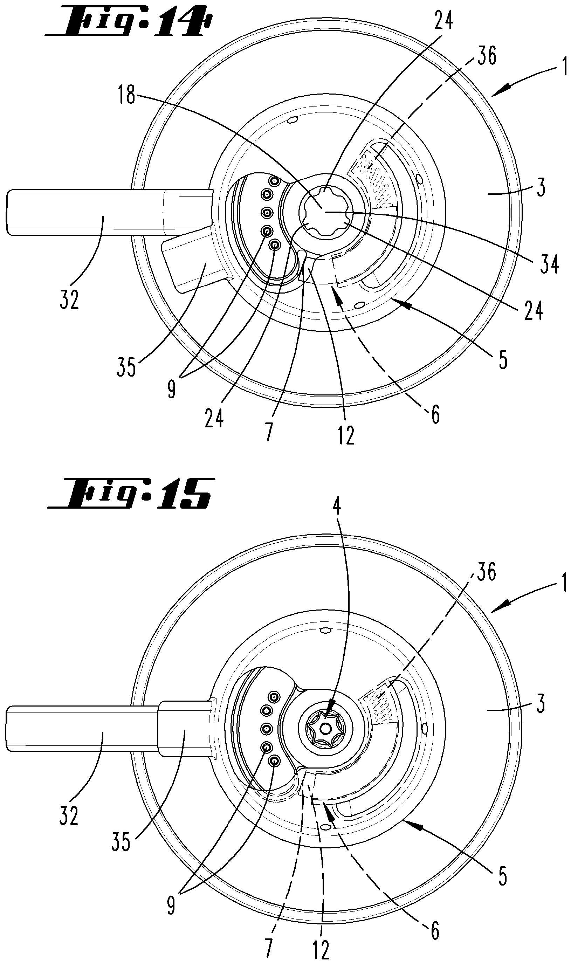

Die Figuren 14 und 15 zeigen jeweils eine Unterseite eines Rührgefäßes 1 mit daran angeordnetem Fußteil 5. In Figur 14 ist in dem Rührgefäß 1 kein Rührwerk 4 angeordnet, so dass der Fußteil 5 nicht gegenüber der Unterseite des Rührgefäßes 1 fixiert ist. In Figur 15 ist ein Rührwerk 4 in dem Rührgefäß 1 montiert und an dem Fußteil 5 sowie dem Gefäßboden 3 des Rührgefäßes 1 fixiert.

Gemäß Figur 14 ist das Federelement 36 expandiert, so dass der dem Federelement 36 gegenüberliegende Endbereich des Sperrriegels 12 in die Sperrstellung verlagert ist und den Fußteil 5 gegenüber dem Gefäßboden 3 des Rührgefäßes 1 so verlagert, dass der Fußteil 5 einen Teil des Verbindungsbereiches 8 des Gefäßbodens 3 verdeckt. In dem Verbindungsbereich 8 sind die elektrischen Kontakte 9 angeordnet, so dass diese nicht mit entsprechenden Gegenkontakten des Basisgerätes 27 verbunden werden können. Um nun die Verbindung der elektrischen Kontakte 9 mit den Gegenkontakten des Basisgerätes 27 zu ermöglichen, ist es erforderlich, den Fußteil 5 so zu verlagern, dass die in Figur 15 dargestellte Stellung erreicht ist. Dazu führt ein Nutzer der Küchenmaschine 2 das Rührwerk 4 durch einerseits die Bodenöffnung 34 des Gefäßbodens 3 und andererseits die Fußteilöffnung 18 des Fußteils 5. Sodann kann der Fußteil 5 gegenüber dem Gefäßboden 3 und dem Fußteil 5 verspannt werden, so dass die Rückstellkraft des Federelementes 36 überwunden werden kann und der Verbindungsbereich 8 freigelegt wird. Das Federelement 36 drückt dabei gegen das korrespondierende Anlageelement 7 des Gefäßbodens 3 und kann somit unter Freigabe des Verbindungsbereiches 8 komprimiert werden. Im Übrigen gelten die Ausführungen, die in Bezug auf die erste Ausführungsform der Figuren 8 bis 11 gemacht wurden analog.

**Liste der Bezugszeichen**

| | | | |
|---|---|---|---|
| 1 | Rührgefäß | 29 | Schalter |
| 2 | Küchenmaschine | 30 | Verriegelungswalze |
| 3 | Gefäßboden | 31 | Deckel |
| 4 | Rührwerk | 32 | Griff |
| 5 | Fußteil | 33 | Messer |
| 6 | Sperrelement | 34 | Bodenöffnung |
| 7 | Anlageelement | 35 | Fußteilhandhabe |
| 8 | Verbindungsbereich | 36 | Federelement |
| 9 | Elektrischer Kontakt | | |
| 10 | Sperrklinke | | |
| 11 | Schwenkachse | | |
| 12 | Sperrriegel | | |
| 13 | Rotationsachse | | |
| 14 | Rührwerkwelle | | |
| 15 | Lagerkörper | | |
| 16 | Fixierungsmittel | | |
| 17 | Lagervorsprung | | |
| 18 | Fußteilöffnung | | |
| 19 | Fixierrampe | | |
| 20 | Ebene | | |
| 21 | Ebene | | |
| 22 | Ebene | | |
| 23 | Festsetzungsvorsprung | | |
| 24 | Fixierungsmittel | | |
| 25 | Lagerrampe | | |
| 26 | Fixierungsvorsprung | | |
| 27 | Basisgerät | | |
| 28 | Display | | |

## Patentansprüche

1. Rührgefäß (1) für eine elektromotorisch betriebene Küchenmaschine (2), mit einem Gefäßboden (3), einem durch den Gefäßboden (3) in das Rührgefäß (1) ragenden Rührwerk (4) und einem außenseitig mit dem Gefäßboden (3) verbindbaren Fußteil (5), welcher zur Fixierung des Rührwerks (4) an dem Gefäßboden (3) ausgebildet ist, **dadurch gekennzeichnet, dass** der Gefäßboden (3) oder der Fußteil (5) ein mit einer Federkraft eines Federelementes (36) beaufschlagtes Sperrelement (6) aufweist, welches mittels eines korrespondierenden Anlageelementes (7) des Fußteils (5) oder des Gefäßbodens (3) von einer eine Fixierung des Rührwerks (4) verhindernden Sperrstellung entgegen der Federkraft in eine eine Fixierung ermöglichende Freigabestellung verlagerbar ist, wobei es bei Abwesenheit des Rührwerks (4) an dem Gefäßboden (3) nicht zu einer Fixierung des Fußteils (5) an dem Gefäßboden (3) kommt und der Fußteil (5) relativ zu dem Gefäßboden (3) verlagerbar bleibt und von dem Sperrelement (6) in eine Sperrstellung gedrückt wird.

2. Rührgefäß (1) nach Anspruch 1, **dadurch gekennzeichnet, dass** das Sperrelement (6) so an dem Gefäßboden (3) oder dem Fußteil (5) angeordnet ist, dass dieses bezogen auf einen entspannten Zustand des Federelementes (36) in einen für eine Verbindung des Rührgefäßes (1) mit einer elektromotorisch betriebenen Küchenmaschine (2) ausgebildeten Verbindungsbereich (8) ragt und somit eine Verbindung verhindert.

3. Rührgefäß (1) nach Anspruch 2, **dadurch gekennzeichnet, dass** der Verbindungsbereich (8) elektrische Kontakte (9) zur Verbindung mit entsprechenden Gegenkontakten einer elektromotorisch betriebenen Küchenmaschine (2) aufweist.

4. Rührgefäß (1) nach einem der Ansprüche 1 bis 3, **dadurch gekennzeichnet, dass** das Sperrelement (6) eine an dem Gefäßboden (3) schwenkbeweglich angeordnete Sperrklinke (10) ist, welche um eine senkrecht zu dem Gefäßboden (3) angeordnete Schwenkachse (11) schwenkbar ist.

5. Rührgefäß (1) nach einem der Ansprüche 1 bis 3, **dadurch gekennzeichnet, dass** das Sperrelement (6) ein an dem Fußteil (5) schiebebeweglich angeordneter Sperrriegel (12) ist, welcher bezogen auf einen verbundenen Zustand von Gefäßboden (3) und Fußteil (5) in einer zu dem Gefäßboden (3) parallelen Ebene verschiebbar ist.

6. Rührgefäß (1) nach einem der vorhergehenden Ansprüche, **dadurch gekennzeichnet, dass** der Fußteil (5) durch Rotation um eine Rotationsachse (13) des Rührwerks (4) an dem Rührwerk (4) und/oder dem Gefäßboden (3) fixierbar ist.

7. Rührgefäß (1) nach einem der vorhergehenden Ansprüche, **dadurch gekennzeichnet, dass** der Fußteil (5) und ein eine Rührwerkwelle (14) lagernder Lagerkörper (15) des Rührwerks (4) korrespondierende Fixierungsmittel (16) aufweisen, welche für eine Fixierung des Rührwerks (4) aneinander festlegbar sind.

8. Rührgefäß (1) nach Anspruch 7, **dadurch gekennzeichnet, dass** der Lagerkörper (15) des Rührwerks (4) bezogen auf eine Rotationsachse (13) des Rührwerks (4) mindestens einen nach außen weisenden Lagervorsprung (17) aufweist, und dass der Fußteil (5) eine Fußteilöffnung (18) zur Aufnahme des Lagerkörpers (15) aufweist, wobei die Fußteilöffnung (18) mindestens eine Fixierrampe (19) zur Festlegung des Lagervorsprungs (17) aufweist.

9. Rührgefäß (1) nach Anspruch 8, **dadurch gekennzeichnet, dass** der Lagerkörper (15) eine Mehrzahl von Lagervorsprüngen (17) aufweist, welche in eine Richtung parallel zu der Rotationsachse (13) betrachtet in drei zueinander beabstandeten Ebenen (20, 21, 22) angeordnet sind, wobei die Lagervorsprünge (17) aufweisen: mindestens einen in einer ersten Ebene (20) angeordneten Festsetzungsvorsprung (23) zum Eingriff in ein korrespondierendes Fixierungsmittel (24) des Gefäßbodens (3), mindestens eine in einer zweiten Ebene (21) angeordnete Lagerrampe (25) und mindestens einen in einer dritten Ebene (22) angeordneten Fixierungsvorsprung (26), wobei die Fixierrampe (19) des Fußteils (5) zwischen der Lagerrampe (25) und dem Fixierungsvorsprung (26) fixierbar ist.

10. Elektromotorisch betriebene Küchenmaschine (2) mit einem Basisgerät (27) und einem mit dem Basisgerät (27) verbindbaren Rührgefäß (1), **dadurch gekennzeichnet, dass** das Rührgefäß (1) nach einem der vorhergehenden Ansprüche ausgebildet ist.

## Claims

1. A mixing vessel (1) for an electric motor-operated food processor (2), with a vessel floor (3), an agitator (4) extending through the vessel floor (3) into the mixing vessel (1), and a foot part (5) that can be externally connected with the vessel floor (3), which is designed for fixing the agitator (4) to the vessel floor (3), **characterized in that** the vessel floor (3) or foot part (5) has a blocking element (6) that can be exposed to the spring force of a spring element (36), and can be shifted against the spring force by means of a corresponding contact element (7) of the foot part (5) or vessel floor (3) from a blocking position that prevents a fixation of the agitator (4) into a release position that enables a fixation, wherein, in absence of the agitator (4) at the vessel floor (3), no fixation of the foot part (5) is performed at the vessel floor (3) and the foot part (5) remains displaceable relative to the vessel floor (3) and gets pushed by the locking element (6) into a locking position.

2. The mixing vessel (1) according to claim 1, **characterized in that** the blocking element (6) is arranged on the vessel floor (3) or foot part (5) in such a way relative to a relaxed state of the spring element (36) as to protrude into a connecting area (8) formed to join the mixing vessel (1) with an electric motor-operated food processor (2), thereby preventing a connection.

3. The mixing vessel (1) according to claim 2, **characterized in that** the connecting area (8) has electrical contacts (9) for connection with corresponding counter-contacts of an electric motor-operated food processor (2).

4. The mixing vessel (1) according to one of claims 1 to 3, **characterized in that** the blocking element (6) is a pawl (10) pivoted to the vessel floor, which can be pivoted around a swivel axis (11) arranged perpendicular to the vessel floor (3).

5. The mixing vessel (1) according to one of claims 1 to 3, **characterized in that** the blocking element (6) is a locking bolt (12) slideably arranged on the foot part (5), which can be shifted into a plane parallel to the vessel floor (3) relative to a connected state of the vessel floor (3) and foot part (5).

6. The mixing vessel (1) according to one of the preceding claims, **characterized in that** the foot part (5) can be fixed on the agitator (4) and/or vessel floor (3) through rotation around a rotational axis (13) of the agitator (4).

7. The mixing vessel (1) according to one of the preceding claims, **characterized in that** the foot part (5) and a bearing body (15) of the agitator (4) that holds an agitator shaft (14) have corresponding fixation means (16), which can be secured to each other to fix the agitator (4) in place.

8. The mixing vessel (1) according to claim 7, **characterized in that** the bearing body (15) of the agitator (4) has at least one outwardly facing bearing projection (17) relative to a rotational axis (13) of the agitator (4), and that the foot part (5) has a foot part opening (18) for receiving the bearing body (15), wherein the foot part opening (18) has at least one fixing ramp (19) for securing the bearing projection (17).

9. The mixing vessel (1) according to claim 8, **characterized in that** the bearing body (15) has a plurality of bearing projections (17), which as viewed in a direction parallel to the rotational axis (13) are arranged in three planes (20, 21, 22) spaced apart from each other, wherein the bearing projections (17) have at least one setting projection (23) arranged in a first plane (20) for engaging into a corresponding fixation means (24) of the vessel floor (3), at least one bearing ramp (25) arranged in a second plane (21), and at least one fixation projection (26) arranged in a third plane (22), wherein the fixing ramp (19) of the foot part (5) can be fixed between the bearing ramp (25) and fixation projection (26).

10. An electric motor-operated food processor (2) with a base unit (27) and a mixing vessel (1) that can be connected with the base unit (27), **characterized in that** the mixing vessel (1) is designed according to one of the preceding claims.

## Revendications

1. Récipient de mélange (1) pour un robot de cuisine à moteur électrique (2), comprenant un fond de récipient (3), un agitateur (4) faisant saillie dans le récipient de mélange (1) à travers le fond de récipient (3) et une partie inférieure (5) qui peut être reliée du côté extérieur au fond de récipient (3) et qui est conçu pour fixer l'agitateur (4) au fond de récipient (3), **caractérisé en ce que** le fond de récipient (3) ou la partie inférieure (5) présente un élément de blocage (6) sollicité par une force élastique d'un élément élastique (36) qui peut être déplacé à l'encontre de la force élastique au moyen d'un élément d'appui (7) correspondant de la partie inférieure (5) ou du fond de récipient (3) depuis une position de blocage empêchant la fixation de l'agitateur (4) dans une position de libération permettant la fixation, dans lequel en l'absence de l'agitateur (4) sur le fond de récipient (3), la fixation de la partie inférieure (5) sur le fond de récipient (3) ne peut pas être obtenue et la partie inférieure (5) reste déplaçable par rapport au fond de récipient (3) et est poussée par l'élément de blocage (6) dans une position de blocage.

2. Récipient de mélange (1) selon la revendication 1, **caractérisé en ce que** l'élément de blocage (6) est associé au fond de récipient (3) ou à la partie inférieure (5) de manière à, par rapport à un état détendu de l'élément élastique (36), faire saillie dans une zone de liaison (8) prévue pour relier le récipient de mélange (1) à un robot de cuisine à moteur électrique (2) et empêche ainsi une liaison.

3. Récipient de mélange (1) selon la revendication 2, **caractérisé en ce que** la zone de liaison (8) présente des contacts électriques (9) pour contacter des contre-contacts correspondants d'un robot de cuisine à moteur électrique (2).

4. Récipient de mélange (1) selon l'une des revendications 1 à 3, **caractérisé en ce que** l'élément de blocage (6) est un cliquet de blocage (10) qui est associé de manière mobile par pivotement au fond de récipient (3) et qui peut pivoter autour d'un axe de pivotement (11) agencé perpendiculairement au fond de récipient (3).

5. Récipient de mélange (1) selon l'une des revendications 1 à 3, **caractérisé en ce que** l'élément de blocage (6) est une broche de blocage (12) qui est associée de manière coulissante à la partie inférieure (5) et qui, par rapport à un état relié du fond de récipient (3) et de la partie inférieure (5), est déplaçable dans un plan parallèle au fond de récipient (3).

6. Récipient de mélange (1) selon l'une des revendications précédentes, **caractérisé en ce que** la partie inférieure (5) peut être fixée à l'agitateur (4) et/ou au fond de récipient (3) par rotation autour d'un axe de rotation (13) de l'agitateur (4).

7. Récipient de mélange (1) selon l'une des revendications précédentes, **caractérisé en ce que** la partie inférieure (5) et un corps de palier (15) de l'agitateur (4) supportant un arbre de l'agitateur (14) ont des moyens de fixation qui se correspondent (16) et qui peuvent être solidarisés entre eux pour la fixation de l'agitateur (4).

8. Récipient de mélange (1) selon la revendication 7, **caractérisé en ce que** le corps de palier (15) de l'agitateur (4) présente au moins une saillie de palier (17) dirigée vers l'extérieur par rapport à un axe de rotation (13) de l'agitateur (4), et **en ce que** la partie inférieure (5) présente une ouverture (18) pour recevoir le corps de palier (15), dans lequel l'ouverture (18) de la partie inférieure présente au moins une rampe de fixation (19) pour immobiliser la saillie de palier (17).

9. Récipient de mélange (1) selon la revendication 8, **caractérisé en ce que** le corps de palier (15) présente une pluralité de saillies de palier (17) qui, vues dans une direction parallèle à l'axe de rotation (13), sont agencées dans trois plans (20, 21, 22) espacés les uns des autres, dans lequel les saillies de palier (17) présentent : au moins une saillie d'immobilisation/positionnement (23) agencée dans un premier plan (20) pour venir en engagement dans un moyen de fixation correspondant (24) du fond de récipient (3), au moins une rampe d'appui (25) agencée dans un deuxième plan (21) et au moins une saillie de fixation (26) disposée dans un troisième plan (22), dans lequel la rampe de fixation (19) de la partie inférieure (5) est fixable entre la rampe d'appui (25) et la saillie de fixation (26).

10. Robot de cuisine à moteur électrique (2), comprenant un appareil de base (27) et un récipient de mélange (1) qui peut être relié à l'appareil de base (27), **caractérisé en ce que** le récipient de mélange (1) est conçu selon l'une des revendications précédentes.
